# EUROPÄISCHE PATENTSCHRIFT

(11) **EP 3 676 072 B1**
(45) Veröffentlichungstag und Bekanntmachung des Hinweises auf die Patenterteilung: **01.12.2021**
(21) Anmeldenummer: 18768806.4
(22) Anmeldetag: 03.09.2018
(51) Int. Cl.: B29C 49/12, B29C 49/78

(54) **SYSTEM UND VERFAHREN ZUR ZUSTANDSÜBERWACHUNG VON LINEARANTRIEBEN VON STRECK-/BLASMASCHINEN**
SYSTEM AND METHOD FOR STATE MONITORING OF LINEAR DRIVES OF STRETCHING/BLOW MOULDING MACHINES
SYSTÈME ET PROCÉDÉ SERVANT À SURVEILLER L'ÉTAT D'ENTRAÎNEMENTS LINÉAIRES DE MACHINES D'ÉTIRAGE/DE SOUFFLAGE

(30) Priorität: 01.09.2017 DE 102017120161
(43) Veröffentlichungstag der Anmeldung: 08.07.2020
(60) Teilanmeldung: 21195859.0
(73) Patentinhaber: Krones AG, 93073 Neutraubling (DE)
(72) Erfinder: STRAUSS, Johannes, 93073 Neutraubling (DE)
(74) Vertreter: Bittner, Bernhard
(86) Internationale Anmeldenummer: PCT/EP2018/073575
(87) Internationale Veröffentlichungsnummer: WO 2019/043211

(56) Entgegenhaltungen:
- EP-A1- 1 066 149
- EP-A1- 1 484 160
- JP-A- H11 348 101
- US-A1- 2010 078 861
- US-A1- 2012 139 169
- US-A1- 2017 157 834

## Beschreibung

Die vorliegende Erfindung betrifft einen Linearantrieb für eine Streck-/Blasmaschine, welcher einen Vergleich der Ist-Kraftaufnahme mit der Soll-Kraftaufnahme ermöglicht, sowie ein Verfahren zur Ermittlung eines Reinigungsintervalls auf Basis eines Vergleich der Ist-Kraftaufnahme mit der Soll-Kraftaufnahme eines Linearantrieb für eine Streck-/Blasmaschine.

Aus dem Stand der Technik sind Streck-/Blasmaschinen zur Produktion von PET-Flaschen bekannt. Bei diesen wird beim Umformen von Vorformlingen (im Folgenden auch "Pre-Formen" genannt) zu Behältnissen, insbesondere Flaschen, der Streckvorgang der Pre-Formen zur optimalen Materialverteilung durch Reckstangen ausgeführt, die durch geregelte Servo-Linearantriebe angetrieben werden. Die Lagerung dieser Linearantriebe ist meist als Kunststoff-Gleitlager ausgeführt. Oftmals wird der magnetische Läuferfluss mit Permanentmagneten erzeugt. Bei derartigen Reckeinheiten (im Folgenden auch als Reckeinrichtung bezeichnet) ist es insbesondere wichtig, dass die Bewegung der Reckeinheit während des Blasprozesses einer in Zeit und Weg exakt vorgegeben Bewegung folgt. Sollte diese Vorgabe nicht eingehalten werden können, kann dies zur Verschlechterung der Behältnisqualität bzw. zu Störungen führen.

Bei den aus dem Stand der Technik bekannten Streck-/Blasmaschinen kann die Bewegung der Reckeinheit durch externe Störungen oder durch zu hohe Reibung negativ beeinflusst werden. Häufig ist eine zu starke Verschmutzung des Läufers die Ursache für zu hohe Reibung. Die Verschmutzung des Läufers wird durch seine Magnetisierung begünstigt, weil dadurch ferromagnetische Schmutzpartikel angezogen werden und sich darauf dauerhaft anlagern können.

Eine weitere Ursache für eine negative Beeinflussung der Bewegung der Reckeinheit könnte eine fehlerhaft montierte Reckeinheit sein. Bei vielen auf dem Markt befindlichen Ausführungsformen gibt es zusätzlich zur Motorlagerung eine Lagerung der extern angebrachten Reckstangen an einem Schlitten. Dadurch ist die Gesamtlagerung überbestimmt, wodurch bei nicht exakter Montage ein Verspannen der Reckeinheit auftreten kann.

Addieren sich diese negativen Einflüsse zu einer unzulässigen Belastung des Reckantriebes kann dies in einem Ausfall bzw. einer Störungen der Reckeinheit resultieren. Um einen solchen Ausfall der Reckeinheit zu verhindern, ist es üblich den Läufer in regelmäßigen Abständen zu reinigen. Je Verschmutzungsgrad der Umgebung unterscheiden sich die notwendigen Intervalle für die Reinigung sehr stark. Insbesondere der Verschmutzungsgrad mit (metallischen) Partikeln bewirkt starke Änderungen des Wartungsintervalls. Da sich diese Umgebungsbedingungen während des Betriebs einer Streck-/Blasmaschinen ändern können, ist es schwierig ein allgemein passendes Wartungsintervall zu bestimmen um kostenoptimal arbeiten zu können. Zusätzlich kann durch die oben beschriebenen Verspannungen der während des Betriebs noch tolerierbare Verschmutzungsgrad in unbekannter Weise verändert werden, so dass Voraussagen über ein optimales Wartungsintervall nicht möglich sind.

Systeme mit Linearantriebe und entsprechende Verfahren nach dem Stand der Technik werden in US2012139169A1, EP1066149B1, US2017157834A1, US2010078861A1, DE102007008023A1, EP1484160A1 und DE102008013419A1 offenbart.

Der vorliegenden Erfindung liegt daher die Aufgabe zugrunde, einen Linearantrieb für eine Streck-/Blasmaschine bereitzustellen, welcher Betriebsparameter überwacht und Hinweise auf eine notwendige Wartung liefert. Außerdem ist es Aufgabe der Erfindung, ein Verfahren zur Ermittlung eines optimalen Wartungsintervalls für einen Linearantrieb für eine Streck-/Blasmaschine bereitzustellen.

Diese Aufgabe wird durch die Merkmale des Anspruchs 1 gelöst.

Ein solcher Linearantrieb für eine Streck-/Blasmaschine ist in der Lage, alle benötigten Informationen aus der Antriebsregelung zur Identifizierung der Reibung im System (bzw. der Reckeinheit) während des normalen Betriebes zu ermitteln und auszuwerten. Dabei ist eine sehr präzise Bestimmung der Reibung vorteilhaft, da diese einen wesentlichen Einfluss auf die Notwendigkeit einer Wartung hat. Obwohl die Reibung nur einen geringen Anteil an allen im System bzw. des Linearantriebs auftretenden Kräften hat, ist durch einen solchen Linearantrieb die Überwachung der Reibung möglich.

In einer bevorzugten Ausführungsform ist der Kraftsensor ein Detektor für die zur Bewegung einer Reckstange notwendige Stromaufnahme. Dies hat sich als vorteilhaft erwiesen, da ein solcher Detektor sehr kompakt realisierbar ist und daher vergleichsweise einfach in Bestehende Anlagen integrierbar ist. Darüber hinaus hat sich herausgestellt, dass die Stromaufnahme ein besonders geeigneter Parameter zur Ermittlung der im System während der Bewegung der Reckstange auftretenden Reibung ist.

Erfingungsgemäss sind die Daten für eine Soll-Kraftaufnahme des Linearantriebs im Betrieb aus Parametern errechnet, die ausgewählt sind aus einer Gruppe, die die Gewichtskraft der bewegten Teile, die vom zugrundeliegenden Bewegungsprofil abhängigen Trägheitskraft der bewegten Teile, den im Behältnis oder dem Vorformling herrschenden Druck, die pneumatisch wirkenden Flächen des Systems und die Reibkraft der Reckeinheit umfasst. Dadurch ist es möglich, das System auf sich häufig ändernde Prozessparameter, die die am Reckantrieb auftretenden Kräfte dominieren, ein- oder umzustellen. Bevorzugt setzt sich die Kraft am Linearantrieb aus der Gewichtskraft der bewegten Teile, aus der Trägheitskraft der bewegten Teile (Bewegungsprofil abhängig) und aus der Kraft, die durch den Druck in dem Behältnis entsteht und auf den horizontalen Querschnitt der Reckstange wirkt, zusammen.

Da das Bewegungsprofil bekannt ist, kann die daraus resultierende Kraft berechnet werden. Ebenso ist die während des Umformungsprozesses zu bewegente Masse bekannt oder kann vergleichsweise einfach ermittelt werden. Die pneumatisch wirkenden Flächen sind bekannt, so dass auf Basis des Blasdrucks in dem Behältnis, welcher in bestehenden Umformungsanlagen teilweise bereits zur Prozessbeobachtung ständig überwacht wird, der darauf wirkende Druck ermittelt werden kann. Aus diesen Informationen wird bevorzugt ein Modell berechnet, welches die zu erwartende Kraft am Linearantrieb voraussagen kann. Werden die oben genannten Daten zugrunde gelegt, ist die einzige Unbekannte die Reibkraft an der Reckeinheit. Zu deren Ermittlung könnte in einer bevorzugten Ausführungsform beispielsweise während eines Optimierungsprozesses das Modell mit unterschiedlichen Werten für die Reibkraft simuliert werden, bis die aus dem Modell ermittelte Kraftaufnahme sich der gemessenen Kraftaufnahme bis auf eine vorgegebene Maximalabweichung angenähert hat.

In einer bevorzugten Ausführungsform umfasst ein in der Speichereinrichtung abgelegter Datensatz eine Vielzahl von Daten, die die zur Bewegung der Reckstange notwendige Kraft zu verschiedenen Zeitpunkten während des Reckvorgangs umfassen. In einer weiter bevorzugten Ausführungsform umfasst ein Datensatz mindestens 2, bevorzugt mindestens 10 besonders bevorzugt mindestens 50 Datenpunkte, die die zur Bewegung der Reckstange notwendige Kraft zu verschiedenen Zeitpunkten abbilden. In einer weiter bevorzugten Ausführungsform umfasst der Datensatz ein kontinuierliches Profil der zur Bewegung der Reckstange notwendige Kraft über die Prozessdauer.

In einer bevorzugten Ausführungsform enthält der Datensatz eine Formel mittels der, für jeden Zeitpunkt während des Prozesses, die jeweilige Soll-Kraftaufnahme in einer Berechnungseinrichtung berechenbar ist. Bevorzugt handelt es sich bei der Berechnungseinrichtung um einen Mikroprozessor.

In einer bevorzugten Ausführungsform umfasst die Speichereinrichtung eine Vielzahl von Datensätzen für die Soll-Kraftaufnahme des Linearantriebs für verschiedene Umformungen von Vorformlingen zu Behältnissen. Dadurch ist es möglich, das System schnell auf geänderte Prozessbedingungen umzustellen. Beispielsweise wird es so ermöglicht bei einer Produktumstellung, bei der für den Streck-/Blasprozess beispielsweise andere Vorformlinge genutzt und/oder andere Behältnisse produziert werden, weiterhin die bei der Bewegung der Reckstange auftretenden Reibkraft zu überwachen. Somit wird es möglich, die Verunreinigung der Reckeinheit unabhängig vom aktuell produzierten Produkt anhand der zu überwindenden Reibkraft ermitteln zu können.

Der Linearantrieb ist bevorzugt Teil einer Vorrichtung zum Umformen von Kunststoffvorformlingen zu Kunststoffbehältnissen, bevorzugt einer Streck-/Blasmaschine. In einer solchen Vorrichtung werden Kunststoffvorformlinge zunächst in einer Heizstrecke thermisch konditioniert und anschließend durch Beaufschlagung mit einem flüssigen oder gasförmigen (und somit fließfähigen) Medium expandiert. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert.

Bei einer Streck-/Blasmaschine werden die Vorformlinge vor und/oder während der Expansion mittels einer Reckstange in Längsrichtung gedehnt. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Weiterhin betrifft die Erfindung ein Verfahren nach Anspruch 4.

Überschreitet die Ist-Kraftaufnahme die Soll-Kraftaufnahme um einen zuvor ermittelten Wert, kann dies auf eine erhöhte Reibung bei der Bewegung der Reckstange zurückzuführen sein. Tritt eine solche Situation auf, wird daher ein Signal ausgegeben, das auf die Notwendigkeit einer zeitnahen Wartung hinweist.

Bevorzugt werden die Informationen aus der Antriebsregelung (insbesondere die Ist-Kraftaufnahme) zur Identifizierung der Reibung im System "Reckeinheit" während des normalen Betriebes verwendet. Dabei ist es wichtig eine sehr präzise Bestimmung der Reibung durchzuführen, was sehr schwierig ist, da die auftretenden Kräfte beim normalen Prozess stark dominierend sind und die Reibkraft nur einen geringen Anteil an der gesamt Kraft am Linearantrieb darstellt. Die beim Antrieb zu überwindende Reibkraft hat somit üblicherweise nur einen geringen Anteil an der gesamten Kraft, die am Linearantrieb aufzubringen ist. Des Weiteren können sich viele Prozessparameter, die die Kraft am Reckantrieb dominieren, ständig ändern. Die Kraft am Linearantrieb setzt sich zusammen aus der Gewichtskraft der bewegten Teile, aus der Trägheitskraft der bewegten Teile (Bewegungsprofil abhängig) und aus der Kraft die durch den Druck in der Flasche entsteht und auf den horizontalen Querschnitt der Reckstange wirkt.

Erfindungsgemäss ist vorgesehen, dass die Daten für eine Soll-Kraftaufnahme des Linearantriebs im Betrieb aus Parametern errechnet werden, die ausgewählt sind aus einer Gruppe, die die Gewichtskraft der bewegten Teile, die vom zugrundeliegenden Bewegungsprofil abhängigen Trägheitskraft der bewegten Teile, den im Behältnis oder dem Vorformling herrschenden Druck, die pneumatisch wirkenden Flächen des Systems und die Reibkraft der Reckeinheit umfasst. Es hat sich gezeigt, dass diese Parameter einen wesentlichen Einfluss auf die Kraftaufnahme des Linearantriebs im Betrieb haben, so dass Abweichungen von der daraus ermittelten Soll-Kraftaufnahme auf unerwünschte Zustände hinweisen können.

Ein weiteres Problem besteht darin, dass einige der genannten Prozessparameter, die die Kraft am Reckantrieb dominieren, sich während des Prozesses ändern können. Beispiele hierfür sind die Trägheitskraft der bewegten Teile (Bewegungsprofil abhängig) und der Gegendruck, der sich aus dem Druck des zu verformenden Behältnisses auf den horizontalen Querschnitt der Reckstange ergibt. Auch der Gasdruck im Inneren des Behältnisses kann als variable Größe den Gegendruck beeinflussen.

Sowohl das Bewegungsprofil als auch die zu bewegente Masse ist üblicherweise bekannt oder kann einfach bestimmt werden. Die pneumatisch wirkenden Flächen sind bekannt und der Blasdruck in der Flasche wird zur Prozessbeobachtung in modernen Umformungseinrichtungen bereits überwacht und ständig gemessen.

In einer bevorzugten Verfahrensvariante wird aus zumindest einigen der oben genannten Daten ein Modell berechnet, das die zu erwartende Kraft am Linearantrieb voraussagen kann. Damit ist die einzige Unbekannte die Reibkraft an der Reckeinheit. In einem folgenden Schritt wird die Reibkraft in einem Optimierungsverfahren ermittelt, bei dem das Modell so lange mit unterschiedlichen Werten für die Reibkraft simuliert, bis die Ergebnisse aus dem Modell am besten mit der gemessenen Kraft aus dem Antriebsregler zusammenpassen. Bevorzugt wird somit aus den oben genannten Parametern oder zumindest aus einer Auswahl der oben genannten Parameter zunächst ein Modell berechnet, welches eine Variable für die Reibkraft an der Reckeinheit enthält und erst in einem darauf folgenden Optimierungsverfahren werden durch Variation von Werten für die Reibkraft Simulationen der Soll-Kraftaufnahme des Linearantriebs durchgeführt, bis eine ausreichend gute Näherung zwischen der Simulation der Soll-Kraftaufnahme und der Ist-Kraftaufnahme des Linearantriebs (im ― nicht verschmutzten ― Idealzustand) erreicht ist.

Ist wie oben beschrieben die Soll-Kraftaufnahme für mindestens einige Zeitpunkte des Prozesses, bevorzugt über den gesamten Zeitverlauf des Prozesses, ermittelt, kann mit einer sehr hohen Genauigkeit die Reibkraft unabhängig von den sonstigen Prozessparametern während der Produktion bestimmt werden. Dies gelingt bei diesem Verfahren auch, wenn die gemessenen Werte sehr stark verrauscht sind, da durch die Simulation der komplette Sollverlauf der Kraft bekannt ist.

In einer bevorzugten Verfahrensvariante wird zum Vergleichen der Ist-Kraftaufnahme mit der Soll-Kraftaufnahme ein Zeitbereich des Prozesses ausgewählt, der sich besonders gut zur Identifizierung des Reibwerts eignet. In einer weiteren bevorzugten Verfahrensvariante kann auch bereits beim Optimierungsverfahren ein Zeitbereich des Prozesses ausgewählt werden, der sich besonders gut zur Identifizierung des gewünschten Parameters eignet. Dadurch kann die Datenmenge und auch der Aufwand für die Ermittlung der Soll-Kraftaufnahme reduziert werden.

In einer bevorzugten Variante wird dazu das Model immer wieder mit variierenden Parametern berechnet und im gewünschten Vergleichszeitfenster mit der Messung der Ist-Kraftaufnahme des Linearantriebs (im ― nicht verschmutzten ― Idealzustand) verglichen. Bevorzugt fließt die Bewertung der normierten Summe aller Fehler aus diesem Vergleich in die Optimierung der Parameter so ein, dass der normierte Fehler im Vergleichszeitfenster möglichst schnell ein Minimum annimmt. Dadurch können sich unerwünschte Schwingungen und Rauschen aus dem Ergebnis automatisch herausmitteln.

In einer besonders bevorzugten Verfahrensvariante wird nicht nur der Betrag der Abweichung zwischen Soll-Kraftaufnahme und der Ist-Kraftaufnahme zur Identifizierung einer notwendigen Wartung betrachtet. Vielmehr ist es in einer bevorzugten Verfahrensvariante möglich, das aus der Lage und/oder Form des Verlaufs der Abweichung zwischen Soll-Kraftaufnahme und der Ist-Kraftaufnahme in einem Diagramm, in dem die Kraftaufnahme gegen die Zeit aufgetragen ist, auf die Art eines zu erwartenden Fehlers zu schließen. So ist es beispielsweise durch die modellbasierte Auswertung möglich, zwischen einer Verschmutzung und einer verspannten Lagerung zu unterscheiden. Insbesondere durch eine getrennt voneinander erfolgende Modellierung dieser beiden Mechanismen in der Simulation können diese getrennt voneinander betrachtet werden.

Somit ist es möglich, nicht nur die Wartungszyklen für die Reinigung der Reckeinheiten (auf Basis eines Anstiegs der ermittelten Reibwerte) bedarfsgerecht zu ermitteln, sondern auch etwaige Fehler können bei der Montage der Reckeinheiten schon bei Inbetriebnahme durch den Vergleich der Ist-Kraftaufnahme mit der Soll-Kraftaufnahme identifiziert und behoben werden.

Das oben beschriebene Verfahren erlaubt darüber hinaus ein genaueres Verständnis über die Abläufe während des Umformungsprozesses von einem Vorformling zu einem Behältnis zu gewinnen. So kann man beispielsweise aus der Modellierung Informationen zum Reckprozess gewinnen. Durch den Vergleich von Simulation und Messung kann zum Beispiel der Verlauf der notwendigen Kraft ermittelt werden, mit dem der Vorformling während dessen Umformung zum Behältnis der Bewegung der Reckstange entgegen wirkt. Eine Auswertung dieser Kraft ermöglicht eine Beurteilung des Streck-/Blasprozesses.

Weitere Vorteile und Ausführungsformen ergeben sich aus den beigefügten Zeichnungen.

Darin zeigen:
- Fig. 1: eine Ansicht einer Reckeinrichtung;
- Fig. 2: eine Ansicht einer anderen Ausführungsvariante einer Reckeinrichtung;
- Fig. 3: eine Detailansicht eines Blaskolbens;
- Fig. 4a: eine Darstellung des Verlaufs der Soll-Kraftaufnahme und der Ist-Kraftaufnahme über die Dauer eines Streck-Blasprozesses;
- Fig. 4b: eine Darstellung der Differenz des in Fig. 4a dargestellten Verlaufs der Soll-Kraftaufnahme und der Ist-Kraftaufnahme über die Dauer eines Streck-Blasprozesses; und
- Fig. 4c: eine Darstellung des Lageprofils des Linearantriebs über die Dauer eines Streck-Blasprozesses.

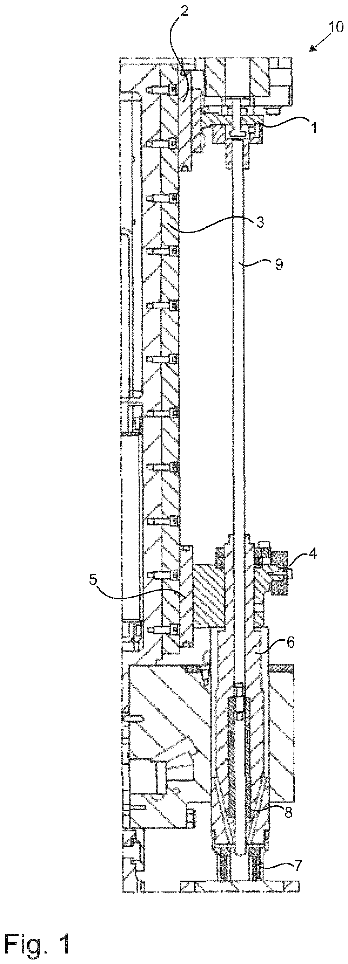

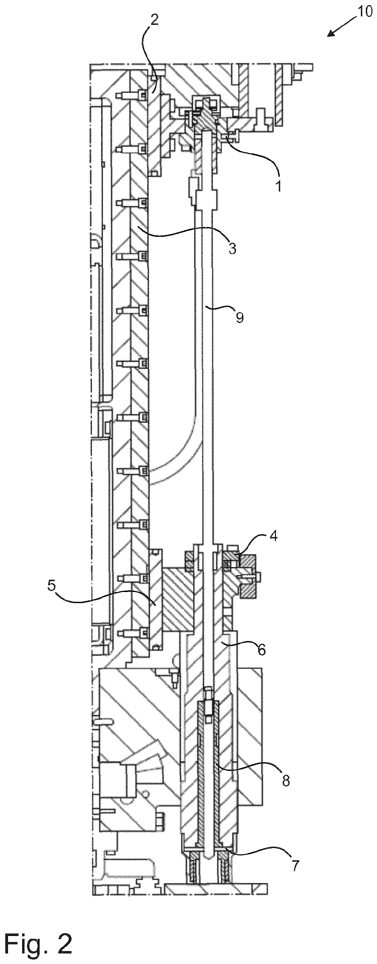

Figur 1 und Figur 2 zeigen jeweils eine Ansicht verschiedener Ausführungen einer Reckeinrichtung 10. Trotz der unterschiedlichen Ausgestaltung können gleiche oder verwendete Elemente mit denselben Bezugszeichen gekennzeichnet sein. Beide dargestellten Reckeinrichtungen umfassen einen Reckschlitten 1, der mittels eines Führungswagens 2 relativbeweglich bezüglich einer nicht im Detail dargestellten Führungsschiene 3 angeordnet ist.

Weiterhin ist ein Blasschlitten 4 gezeigt, welcher ebenfalls über einen Führungswagen 5 entlang der Führungsschiene 3 beweglich ist.

Außerdem ist ein Blaskolben 6 gezeigt, an dessen dem Reckschlitten 1 abgewandten Ende eine Blasdüse 7 angeordnet ist. Im Inneren des Blaskolbens befindet sich eine Führungshülse 8, in der die Reckstange 9 geführt ist. Die Reckstange 9 ist relativbeweglich bezüglich des Blaskolbens 6 und somit auch bezüglich des Blasschlittens 4 angeordnet. Die Relativbewegung wird durch ein Verschieben des Reckschlittens 1, mit dem die Reckstange 9 fest verbunden ist, bezüglich des Blasschlittens 4 realisiert. Bevorzugt wird das Verschieben mittels eines nicht gezeigten Elektromotors realisiert, dessen Stromaufnahme überwacht wird und aus dem die Ist-Kraftaufnahme ermittelt werden kann.

Möglichkeiten für eine Erhöhung der Ist-Kraftaufnahme können im Wesentlichen zwei Ursachen haben. Erste Ursache können Verunreinigungen von relativ zueinander beweglichen Teilen sein. Insbesondere auf der Reckstange 9 und der Führungsschiene 3 können sich Ablagerungen bilden, die einen erhöhten Reibwiderstand bewirken können. Insbesondere wenn der magnetische Läuferfluss mit Permanentmagneten erzeugt wird, ergibt sich die Problematik, dass der Läufer magnetisiert wird und magnetische Partikel anzieht. Diese bleiben aufgrund des Magnetismus haften und können sich auch derart anreichern, dass eine ordnungsgemäße Funktion der Umformungseinrichtung nicht mehr gewährleistet ist.

Außerdem oder zusätzlich dazu kann ein erhöhter Reibwert aus einer nicht exakter Montage oder unerwünschten Verschiebungen einzelner Baugruppen gegenüber einander resultieren, was zu einem Verspannen der Reckeinheit 10 in sich selbst führen kann. Diese negativen Einflüsse alleine oder in Kombination miteinander können zu einer unzulässigen Belastung des Reckantriebes führen, was in einem Ausfall bzw. einer Störungen der Reckeinheit resultieren könnte.

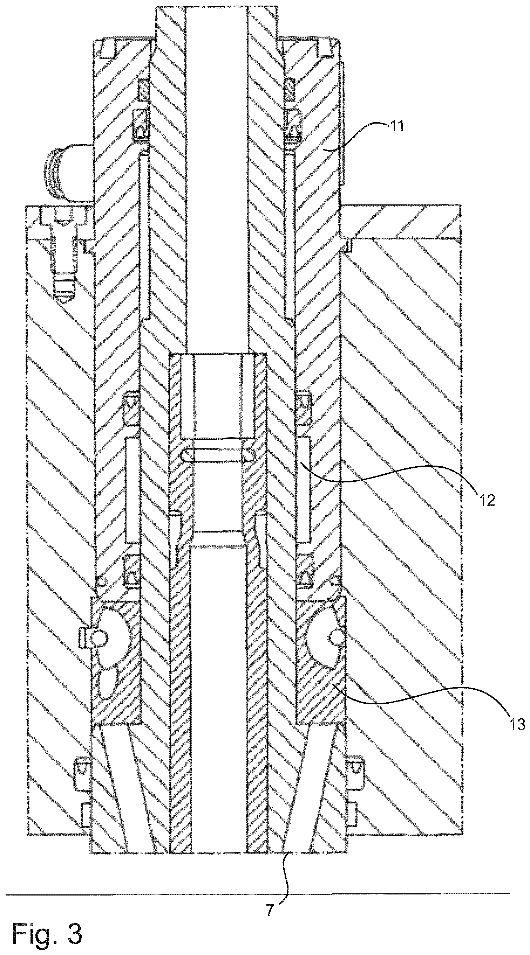

Wie oben erwähnt ist, sind die Massen aller Bauteile der Reckeinrichtung 10 bekannt. Somit können diese Werte in die Berechnung der Soll-Kraftaufnahme einfließen. Einen weiteren Faktor in dieser Berechnung liefern die Druckverhältnisse in dem Blaskolben und im (umzuformenden) Behältnis selbst. Ein Beispiel für einen Blaskolben ist in Figur 3 gezeigt. In den dargestellten Bereichen 11, 12 und 13 herrschen jeweils unterschiedliche Drücke. Während in dem Bereich 11 eine konstante Vorspannung von beispielsweise 10 bar aufrechterhalten wird, befindet sich der Bereich 12 üblicherweise konstant unter Umgebungsdruck. Demgegenüber verändert sich an der Ringfläche im Bereich 13 der Druck während des Blasprozesses. Der dort anliegende Druck entspricht zumindest zeitweise dem Blasdruck und ist abhängig von der jeweiligen Druckstufe. Der Druck kann hier beispielsweise bis zu 40 bar betragen. Der hier auf die Ringfläche 13 wirkende Gegendruck ist unter anderem auch abhängig von dem Durchmesser der Blasdüse 7 und/oder dem Flaschenhals.

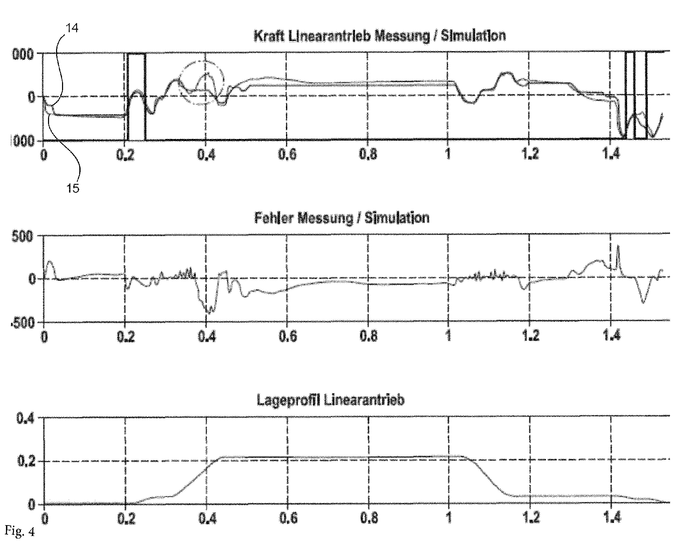

Die Figuren 4a - c zeigen jeweils Diagramme von Prozessparametern während eines Umformungsprozesses. Figur 4a zeigt eine Darstellung des Verlaufs der Soll-Kraftaufnahme (Linie 14), wie sie wie oben beschrieben über eine Simulation ermittelt wurde, und der Ist-Kraftaufnahme (Linie 15) über die Dauer eines Streck-/Blasprozesses. Der Streck-/Blasprozesses dauert im vorliegenden Beispiel etwa 1.5 Zeiteinheiten. Während dieser verändert der Linearantrieb seine Lage entlang des in Figur 4c dargestellten Lageprofils. Wie diesem zu entnehmen ist, verändert sich die Lage zunächst nicht, um dann (mit einer kleinen Stufe) bis zu einer maximalen Lageveränderung von etwa 0.2 Distanzeinheiten verschoben zu werden. In dieser Lage verbleibt der Linearantrieb unverändert für eine gewisse Zeit, bis er nach etwas mehr als 1.0 Zeiteinheiten eine inverse Bewegung zurück in die Ausgangsposition beginnt. Diese erreicht er nach einer zweistufigen Bewegung, von denen die erste deutlich länger beibehalten wird als die zweite, nach etwa 1.5 Zeiteinheiten.

Bei einem Vergleich der Soll-Kraftaufnahme 14 mit der Ist-Kraftaufnahme 15 in Figur 4a wird ersichtlich, dass diese über weite Zeitbereiche nahezu parallel verlaufen, nach etwa 0.4 Zeiteinheiten jedoch deutlich voneinander abweichen, um sich dann wieder aneinander anzunähern und erneut nahezu parallel zu verlaufen.

Subtrahiert man die Werte der Ist-Kraftaufnahme 15 von denjenigen der Soll-Kraftaufnahme 14 erhält man ein Diagramm, wie es in Figur 4b gezeigt ist. Um die Abweichungen deutlicher aufzuzeigen ist der Maßstab gegenüber der Darstellung in Figur 4a verändert worden. Abweichungen von der Null-Linie sind insbesondere nach 0.4 Zeiteinheiten zu erkennen.

In Zusammenschau mit der Darstellung aus Figur 4c und Betrachtung des gesamten Streck-/Blasprozesses kann abgeleitet werden, dass die Abweichung der gemessenen Kraft von dem in der Simulation ermittelten Wert daraus resultiert, dass die Reckkraft zur Verformung des Vorformlings in der zugrundeliegenden Modellierung nicht berücksichtigt wurde. Aus derartigen Abweichungen lassen sich somit Informationen über den Ablauf des Streck-/Blasprozesses und insbesondere über die zu verschiedenen Zeitpunkten notwendige Kraft zur Verlagerung des Linearantriebs ableiten.

### Bezugszeichenliste

- 1: Reckschlitten
- 2: Führungswagen
- 3: Führungsschiene
- 4: Blasschlitten
- 5: Führungswagen
- 6: Blaskolben
- 7: Blasdüse
- 8: Führungshülse
- 9: Reckstange
- 10: Reckeinrichtung, Reckeinheit
- 11: Bereich
- 12: Bereich
- 13: Bereich, Ringfläche
- 14: Soll-Kraftaufnahme
- 15: Ist-Kraftaufnahme

## Patentansprüche

1. System umfassend
ein Linearantrieb für eine Streck-/Blasmaschine,
einen Kraftsensor zur Erfassung der Ist-Kraftaufnahme (15) des Linearantriebs im Betrieb,
eine Speichereinrichtung in der Daten für eine Soll-Kraftaufnahme (14) des Linearantriebs im Betrieb abgelegt sind,
eine Vergleichseinrichtung zum Vergleichen der Ist-Kraftaufnahme mit der Soll-Kraftaufnahme (14) und
einen Signalgeber zur Ausgabe eines Signals bei Überschreiten einer zuvor definierten Abweichung zwischen Soll-Kraftaufnahme (14) und Ist-Kraftaufnahme (15),
**dadurch gekennzeichnet, dass**
die Daten für eine Soll-Kraftaufnahme (14) des Linearantriebs im Betrieb mittels einer vorhandenen Berechnungseinrichtung aus Parametern errechenbar sind, die ausgewählt sind aus einer Gruppe, die
die Gewichtskraft der bewegten Teile,
die vom zugrundeliegenden Bewegungsprofil abhängigen Trägheitskraft der bewegten Teile,
den im Behältnis oder dem Vorformling herrschenden Druck,
die pneumatisch wirkenden Flächen des Systems und die Reibkraft der Reckeinheit (10) umfasst.

2. System nach Anspruch 1, **dadurch gekennzeichnet, dass** der Kraftsensor ein Detektor für die zur Bewegung einer Reckstange (9) notwendige Stromaufnahme ist.

3. System nach einem der vorangegangenen Ansprüche, **dadurch gekennzeichnet, dass**
die Speichereinrichtung eine Vielzahl von Datensätzen für die Soll-Kraftaufnahme (14) des Linearantriebs für verschiedene Umformungen von Vorformlingen zu Behältnissen umfasst.

4. Verfahren zur Ermittlung eines Reibwerts eines Linearantriebs für eine Streck-/Blasmaschine, umfassend die Schritte:
- errechnen einer Soll-Kraftaufnahme (14) des Linearantriebs im Betrieb aus Parametern, die ausgewählt sind aus einer Gruppe, die die Gewichtskraft der bewegten Teile, die vom zugrundeliegenden Bewegungsprofil abhängigen Trägheitskraft der bewegten Teile, den im Behältnis oder dem Vorformling herrschenden Druck, die pneumatisch wirkenden Flächen des Systems und die Reibkraft der Reckeinheit (10) umfasst,
- erfassen eines Ist-Kraftaufnahme (15) des Linearantriebs im Betrieb mittels eines Kraftsensors,
- vergleichen der Ist-Kraftaufnahme (15) mit der Soll-Kraftaufnahme (14),
- ausgeben eines Signals bei Überschreiten einer zuvor definierten Abweichung zwischen Soll-Kraftaufnahme (14) und Ist-Kraftaufnahme (15).

5. Verfahren nach Anspruch 4,
**dadurch gekennzeichnet, dass**
der Kraftsensor die zur Bewegung einer Reckstange (9) notwendige Stromaufnahme detektiert.

6. Verfahren nach Anspruch 4 oder 5,
**dadurch gekennzeichnet, dass**
aus den Parametern zunächst ein Modell berechnet wird, welches eine Variable für die Reibkraft an der Reckeinheit (10) enthält und erst in einem darauf folgenden Optimierungsverfahren durch Variation von Werten für die Reibkraft Simulationen der Soll-Kraftaufnahme (14) des Linearantriebs durchgeführt werden, bis eine ausreichend gute Näherung zwischen der Simulation der Soll-Kraftaufnahme (14) und der Ist-Kraftaufnahme (15) des Linearantriebs erreicht ist.

7. Verfahren nach einem der Ansprüche 4 - 6,
**dadurch gekennzeichnet, dass**
zum Vergleichen der Ist-Kraftaufnahme (15) mit der Soll-Kraftaufnahme (14) ein Zeitbereich des Prozesses ausgewählt wird, der sich besonders gut zur Identifizierung des Reibwerts eignet.

8. Verfahren nach einem der Ansprüche 4 - 7,
**dadurch gekennzeichnet, dass**
auf Basis des Vergleichs der Ist-Kraftaufnahme (15) mit der Soll-Kraftaufnahme (14) ein bedarfsgerechter Wartungszyklus für die Reinigung der Reckeinheit (10) ermittelt wird.

## Claims

1. System comprising
a linear drive for a stretch and/or blow moulding machine,
a force sensor for detecting the actual force absorption (15) of the linear drive during operation,
a storage device in which data for a desired force absorption (14) of the linear drive during operation are stored,
a comparison device for comparing the actual force absorption with the desired force absorption (14) and
a signal emitter for outputting a signal if a previously defined deviation between the desired force absorption (14) and actual force absorption (15) is exceeded,
**characterised in that**
the data for a desired force absorption (14) of the linear drive during operation are calculated from parameters which are selected from a group comprising
the weight force of the moving parts,
the inertial force of the moving parts depending upon the underlying movement profile,
the pressure prevailing in the container or the preform,
the pneumatically effective surfaces of the system and the frictional force of the stretching unit (10).

2. System according to claim 1,
**characterised in that**
the force sensor is a detector for the current consumption necessary for movement of stretching rod (9).

3. System according to one of the preceding claims,
**characterised in that**
the storage device comprises a plurality of data sets for the desired force absorption (14) of the linear drive for different reshapings of preforms into containers.

4. Method for determination of a friction coefficient of a linear drive for a stretching and/or blow moulding machine, comprising the following steps:
- determining a desired force absorption (14) of the linear drive during operation from parameters which are selected from a group comprising the weight force of the moving parts, the inertial force of the moving parts depending upon the underlying movement profile, the pressure prevailing in the container or the preform, the pneumatically effective surfaces of the system and the frictional force of the stretching unit (10),
- determining an actual force absorption (15) of the linear drive during operation by means of a force sensor,
- comparing the actual force absorption (15) with the desired force absorption (14),
- outputting a signal when a previously defined deviation between desired force absorption (14) and actual force absorption (15) is exceeded.

5. Method according to claim 4,
**characterised in that**
the force sensor detects the current consumption necessary for movement of a stretching rod (9).

6. Method according to claim 4 or 5,
**characterised in that**
from the parameters first of all a model is calculated which includes a variable for the frictional force on the stretching unit (10) and only in a subsequent optimisation process are simulations of the desired force absorption (14) of the linear drive carried out by variation of values for the frictional force simulation until a sufficiently good approximation between the simulation of the desired force absorption (14) and the actual force absorption (15) of the linear drive is achieved.

7. Method according to one of claims 4 - 6,
**characterised in that**
a time range of the process which is particularly suitable for identification of the friction coefficient is selected for comparison of the actual force absorption (15) with the desired force absorption (14).

8. Method according to one of claims 4 - 7,
**characterised in that**
on the basis of the comparison of the actual force absorption (15) with the desired force absorption (14) a required maintenance cycle for the cleaning of the stretching unit (10) is determined.

## Revendications

1. Système comprenant
un entraînement linéaire pour une machine d'étirage-soufflage,
un capteur de force pour détecter l'absorption de force réelle (15) de l'entraînement linéaire lors du fonctionnement,
un dispositif mémoire dans lequel des données pour une absorption de force théorique (14) de l'entraînement linéaire lors du fonctionnement sont déposées,
un dispositif de comparaison pour comparer l'absorption de force réelle à l'absorption de force théorique (14) et
un émetteur de signaux pour l'émission d'un signal lors du dépassement d'un écart préalablement défini entre l'absorption de force théorique (14) et l'absorption de force réelle (15),
**caractérisé en ce que**
les données pour une absorption de force théorique (14) de l'entraînement linéaire lors du fonctionnement peuvent être calculées au moyen d'un dispositif de calcul présent à partir de paramètres qui sont choisis dans un groupe qui comprend
le poids des parties déplacées,
la force d'inertie des parties déplacées dépendant du profil de mouvement pris pour base,
la pression régnant dans le contenant ou la préforme,
les surfaces à action pneumatique du système et la force de frottement de l'unité d'étirage (10).

2. Système selon la revendication 1,
**caractérisé en ce que**
le capteur de force est un détecteur pour la consommation de courant nécessaire au mouvement d'une tige d'étirage (9).

3. Système selon l'une quelconque des revendications précédentes,
**caractérisé en ce que**
le dispositif mémoire comprend une pluralité d'ensembles de données pour l'absorption de force théorique (14) de l'entraînement linéaire pour différents formages de préformes en contenants.

4. Procédé pour déterminer un coefficient de frottement d'un entraînement linéaire pour une machine d'étirage-soufflage, comprenant les étapes :
- de calcul d'une absorption de force théorique (14) de l'entraînement linéaire lors du fonctionnement à partir de paramètres qui sont choisis dans un groupe qui comprend le poids des parties déplacées, la force d'inertie des parties déplacées dépendant du profil de mouvement pris pour base, la pression régnant dans le contenant ou la préforme, les surfaces à action pneumatique du système et la force de frottement de l'unité d'étirage (10),
- la détection d'une absorption de force réelle (15) de l'entraînement linéaire lors du fonctionnement au moyen d'un capteur de force,
- la comparaison de l'absorption de force réelle (15) à l'absorption de force théorique (14),
- l'émission d'un signal lors du dépassement d'un écart préalablement défini entre l'absorption de force théorique (14) et l'absorption de force réelle (15).

5. Procédé selon la revendication 4,
**caractérisé en ce que**
le capteur de force détecte la consommation de courant nécessaire au mouvement d'une tige d'étirage (9).

6. Procédé selon la revendication 4 ou 5,
**caractérisé en ce que**
un modèle est tout d'abord calculé à partir des paramètres, lequel contient une variable pour la force de frottement sur l'unité d'étirage (10) et ce n'est que dans un procédé d'optimisation suivant que des simulations de l'absorption de force théorique (14) de l'entraînement linéaire sont réalisées par variation de valeurs pour la force de frottement, jusqu'à ce qu'une approximation suffisamment satisfaisante entre la simulation de l'absorption de force théorique (14) et l'absorption de force réelle (15) de l'entraînement linéaire soit atteinte.

7. Procédé selon l'une quelconque des revendications 4-6,
**caractérisé en ce que**
pour la comparaison de l'absorption de force réelle (15) à l'absorption de force théorique (14), une plage de temps du processus est choisie, qui convient particulièrement bien à l'identification du coefficient de frottement.

8. Procédé selon l'une quelconque des revendications 4-7,
**caractérisé en ce que**
un cycle de maintenance adapté aux besoins pour le nettoyage de l'unité d'étirage (10) est déterminé sur la base de la comparaison de l'absorption de force réelle (15) à l'absorption de force théorique (14).
